# EUROPEAN PATENT APPLICATION

(11) **EP 2 394 974 A1**
(43) Date of publication of application: **14.12.2011**
(21) Application number: 10738657.5
(22) Date of filing: 09.02.2010
(51) Int. Cl.: C04B 35/599, B28B 1/24, C04B 35/632, F01D 5/28, F02B 39/00

(54) **PROCESS FOR PRODUCING SINTERED SIALON CERAMIC**

(30) Priority: 09.02.2009 JP 2009027553
(71) Applicant: IHI Corporation, Tokyo 135-8710 (JP)
(72) Inventor: KANKAWA, Yoshimitsu, Kyoto-shi Kyoto 607-8085 (JP); NAKAGAWA, Katsunori, Tokyo 135-8710 (JP)
(74) Representative: Gritschneder, Martin
(86) International application number: PCT/JP2010/051880
(87) International publication number: WO 2010/090329

(57) **Abstract**

Provided is a process for producing a high-density ceramic product having a three-dimensional complicated shape by injection molding using a sialon powder. The process includes the steps of: preparing a molding material containing a sialon powder A, a sintering aid B, and an organic binder C, in which the sialon powder A is a powder having an average particle diameter of 0.01 to 3.0 µm, the sintering aid B is an oxide of an element selected from the group consisting of Y, Yb, Al and Zr, the aid B is contained in an amount of 0.5 to 15% by weight of the total of the sialon powder A and the sintering aid B, the organic binder C contains 5 to 30% by volume of a polyvinyl butyral having an average molecular weight of 150, 000 or less and 35 to 80% by volume of a polyethylene glycol having an average molecular weight of 5,000 or less, and the binder C is contained in an amount of 30 to 70% by volume of the total of the molding material; injection-molding the molding material, thereby yielding a molded body; and thermal debinding the molded body, and sintering the molded body.

## Description

### TECHNICAL FIELD

The present invention relates to a process for yielding a sialon ceramic sintered product by use of a sialon powder. More specifically, the invention relates to a process for producing a sialon ceramic sintered product by ceramic powder injection molding (CIM method).

### BACKGROUND ART

In recent years, the depletion of resources is becoming a large problem. In particular, about iron ore, the reserve thereof in the crust is 5% or less; thus, the depletion thereof in future has been feared.
Thus, from the viewpoint of good use of resources, it has been considered that a spread of ceramic materials in which good use is made of silicon is an urgent matter. In the latter of the 1970s, fine ceramic materials became very popular, and it was considered that light and highly heat-resistant ceramic materials using silicon nitride, silicon carbide and sialon (SiAlON) are used for engine components of automobiles. However, for processes for synthesizing these ceramic materials, large costs were required, and this matter produced an effect on production costs of final products. For this reason, a large restriction was imposed on the use of the materials in automobile components. In particular, a sialon ceramic material has performance that the material is better in corrosion resistance at a hign temperature and toughness than silicon nitride and silicon carbide ceramic materials. However, in the case of using silicon nitride, alumina, and a rare earth oxide such as yttria as starting materials to produce a product by a reaction sintering method, it is difficult to yield sialon ceramics having a stable composition. Thus, a sintered product stable in physical property is not easily obtained.
In the meantime, a metallic silicon powder and an aluminum powder are directly burnt to attain combustion synthesis, whereby a sialon powder can be yielded.

Patent Documents 1 to 3 each suggest a process for producing a sialon ceramic powder by combustion synthesis.
In a case where a powder having a sialon composition beforehand is used as a starting material, a sialon ceramic product having a stabler strength can be obtained than in the case of a reaction sintering method using, as a starting material, silicon nitride, alumina, a rare earth oxide such as yttria or the like.

Patent Document 3 describes a method of producing a bearing ball by use of a wet compound, to which water is added. However, in the production process disclosed in this patent, water is used as a binder. Thus, although a product having a simple spherical or sheet shape, such as a bearing ball, can be obtained, it is difficult to obtain a product having a three-dimensional complicated shape required for an automobile component, typical examples of the product including a turbine wheel and a vane nozzle.

### PRIOR ART DOCUMENTS

### PATENT DOCUMENTS

Patent Document 1: JP-A-2007-182334
Patent Document 2: JP-A-2005-194154
Patent Document 3: JP-A-2008-162851

### SUMMARY OF THE INVENTION

### PROBLEMS TO BE SOLVED BY THE INVENTION

Accordingly, an object of the present invention is to provide a production process making it possible to yield a ceramic product having a complicated three-dimensional shape by a CIM method, using a sialon powder produced by a combustion synthesis method.

### MEANS FOR SOLVING THE PROBLEMS

The present inventors have made an attempt to produce a ceramic component by a CIM method using a sialon powder. As a result, the inventors have succeeded in yielding a satisfactory ceramic sintered product by use of a molding material in which the average particle diameter of a sialon powder, the species and the addition amount of a sintering aid, and the species and the addition amount of an organic binder are each set into a specific range. Thus, the problems have been effectively solved.

In order to solve the problems, the invention includes
the step of preparing a molding material containing a sialon powder A, a sintering aid B, and an organic binder C, in which
the sialon powder A is a powder having an average particle diameter of 0.01 to 3.0 µm,
the sintering aid B is an oxide of an element selected from the group consisting of Y, Yb, Al and Zr, the aid B is contained in an amount of 0.5 to 15% by weight of the total of the sialon powder A and the sintering aid B,
the organic binder C contains 5 to 30% by volume of a polyvinyl butyral having an average molecular weight of 150, 000 or less and 35 to 80% by volume of a polyethylene glycol having an average molecular weight of 5,000 or less, and the binder C is contained in an amount of 30 to 70% by volume of the total of the molding material,
the step of injection-molding the molding material, thereby yielding a molded body, and
the step of thermal debinding (heating/degreasing) the molded body, and sintering the molded body.

According to the invention, a sialon powder is used as a starting material; thus, a sialon ceramic material stable in composition can be yielded. Moreover, an oxide of at least one element selected from the group consisting of Y, Yb, Al and Zr is added as a sintering aid in the aforementioned proportion, and an organic binder is added in the aforementioned proportion, and these components are kneaded to yield a molding material. By use of this material, the molding material can be filled into even a mold having a complicated shape by injection molding, and further after the material is debound (degreased) and sintered, a satisfactory sialon sintered product having a sintered density (the density means the relative density of the sintered body, the same matter being applied to the following description) of 95% or more can be yielded. It is therefore possible to yield, with good dimensional precision, a sialon ceramic component having a complicated shape and good endurance, which has not easily been yielded in the prior art.

Additionally, in the case of using, as the organic binder C, an organic binder containing 5 to 30% by volume of a polyvinyl butyral (PVB) having an average molecular weight of 150, 000 or less and 35 to 80% by volume of a polyethylene glycol (PEG) having an average molecular weight of 5,000 or less, a product high in sintered density can be yielded regardless of the value of the wall thickness thereof.
In other words, about a product having a small wall thickness (of less 1 mm), the use of the organic binder C makes it possible to give the product as a product high in sintered density only by performing thermal debinding, and sintering after the molding material is injection-molded. By contrast, when a product having a large wall thickness is produced, after inj ection-molding the molding material to yield a molded body; by performing an extraction debinding step of removing at least one portion of the polyethylene glycol in the molded body by use of a solvent in which the polyethylene glycol is soluble but the polyvinyl butyral is not soluble, the product can be yielded as a product high in sintered density. This appears to be based on the following: the polyethylene glycol is eluted out so that the so-called byroad is formed in the molded body; thus, in the subsequent thermal debinding step, the organic binder can be efficiently removed. Preferably, the polyethylene glycol is removed in an amount corresponding to 25% or more by volume of the total of the binder in the molded body. This extraction debinding step makes it possible to produce a product having a sintered density of 95% or more stably even when the product has a wall thickness of 1 mm or more.
After the extraction debinding, it is preferred that the molded body is dried to remove the solvent and then the body is thermal debound and sintered.

It is appropriate to conduct the thermal debinding at a temperature rise rate of 5 to 150°C/hr up to a highest temperature of 400 to 800°C in an inert gas atmosphere, and further conduct the sintering at a temperature rise rate of 50 to 400°C/hr and a sintering temperature of 1600 to 2000°C in an inert gas atmosphere. In this way, a product having no defects can be stably produced.

Furthermore, the molded product thermal debound is subjected to a cold isostatic pressing (CIP) treatment at 50 MPa or more, thereby making it possible to remove microscopic internal defects generated at the debinding time. The treatment makes it possible to remove, in particular, internal defects based on the coexistence of coarseness and denseness, which are easily generated in a thick-walled region.

In the case of putting, in the sintering step, the molded body after the debinding (or after the CIP treatment) into a container of silicon nitride, aluminum nitride, alumina or sialon, and then sintering the body, it is possible to prevent a reaction resulting from residues of the binder, and gas impurities that remain in the sintering furnace at a high temperature, so as to restrain the incorporation of impurities during sintering.

Furthermore, by subjecting the sintered product to a hot isostatic pressing (HIP) treatment at a treating pressure of 100 MPa or more and a treating temperature of 1600°C or higher and 1900°C or lower, internal defects generated at the sintering time can be removed.

The process makes it possible to stably produce a high-density product having a complicated three-dimensional shape. Thus, a sialon product having desired properties can be produced even when the product is a product for which endurance and others are required, such as a turbine wheel or a vane nozzle.

### EFFECTS OF THE INVENTION

According to the invention, a specific rare earth oxide ceramic powder is mixed, as a sintering aid, with a powder which already has a sialon composition, and further the aforementioned particle diameter of the sialon powder, amount of the sintering aid, and amount and species of the organic binder, thereby making it possible to produce a sialon ceramic sintered product having a three-dimensional complicated shape by a CIM method. By producing, in particular, a turbine wheel or a vane nozzle, which is required as a component of an automobile supercharger, by the present process, a product can be yielded which makes better use of characteristics of sialon ceramics, and are lighter and higher in corrosion resistance and toughness at high temperatures of 1000°C or higher as compared with metallic components used in the prior art.

### BRIEF DESCRIPTION OF THE DRAWINGS

[Fig. 1] Fig. 1 is a flowchart illustrating a production process according to the present invention.
[Fig. 2] Fig. 2 shows SEM photographs (x 1000) of the surface and the inside of a sintered body.
[Fig. 3] Fig. 3 is an X-ray diffraction data on the sintered body.
[Fig. 4] Fig. 4 is a SEM photograph (x 500) of the surface of the sintered body.
[Fig. 5] Fig. 5 shows drawings illustrating the shape of a turbine wheel produced in Example 5, and Fig. 5(a) is a perspective view thereof, and Fig. 5 (b) is a plan view thereof.
[Fig. 6] Fig. 6 shows drawings illustrating the shape of a variable vane produced in Example 6, and Fig. 6 (a) is a plan view thereof, Fig. 6(b) is a front view thereof, and Fig. 6(c) is a left-hand side view thereof.

### EMBODIMENTS FOR CARRYING OUT THE INVENTION

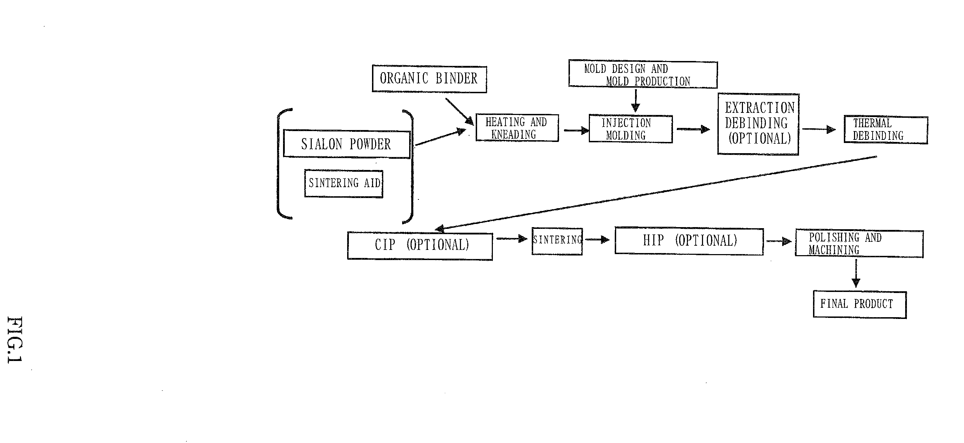

A process of the present invention for producing a sialon ceramic product is illustrated in Fig. 1.
A sialon powder according to the invention can be produced by a method of using metallic silicon and metallic aluminum as starting materials and causing the materials to react directly with oxygen and nitrogen (combustion synthesis method). The sialon (SiAlON) powder yielded by the combustion synthesis method has a composition formula of Si_{6-z}Al_{z}O_{z+x}N₈-_{(z+y)}, in which Z is from about 1 to 4, X is from about 0 to 2, and Y is from about 0 to 2.
The average particle diameter of the sialon powder A is preferably 0.01 µm or more and 3.0 µm or less. If the average particle diameter is less than 0.01 µm, the surface area of the powder increases. Thus, the addition amount of the binder is increased, so that the molded body made of the material is largely deformed when debound. Moreover, if the binder amount is increased, the material gives a large shrinkage ratio when sintered. Thus, the dimensions after the sintering are largely varied. As a result, a sintered product high in dimensional precision is not easily yielded. If the powder particle diameter is more than 3.0 µm, a sintered density (relative density) of 95% or more is not stably obtained with ease, so that the strength is remarkably declined. Thus, the resultant cannot be used as a product. The average particle diameter is more preferably from 0.1 to 2.0 µm, even more desirably from 0.2 to 0.7 µm. In the invention, the average particle diameter means the weight-cumulative 50% average diameter measured by use of a particle size distribution measuring device using the laser diffraction scattering method. The particle size distribution measuring device may be model SALD-2000 manufactured by Shimadzu Corp.

In order to improve the sintered density, at least one oxide ceramic powder made from Y, Yb, Al or Zr is added, as a sintering aid B, to the sialon powder. About the addition amount of the sintering aid, the amount in terms of oxide amount is preferably 0.5% or more and 15% or less by weight of the total of the sialon powder and the sintering aid, more preferably 1.0% or more and 10.0% or less by weight thereof. If the addition amount of the sintering aid is less than 0.5% by weight, the sintered density is not easily improved. If the addition amount is more than 15% by weight, the sintering temperature for making the material dense lowers but physical properties thereof at high temperatures deteriorate.
When the oxide(s) of Y, Yb, Al and/or Zr is/are used as the sintering aid, the sintered body can be made dense at a sintering temperature of about 1700°C. However, if a material other than the oxides of Y, Yb, Al and Zr is used as the sintering aid, the high-temperature strength after the sintering lowers.

In order to improve the fluidity and debindability (degreasability), and give flexibility, an organic binder C is further added to the mixture of the sialon powder A and the sintering aid B, and these components are kneaded to yield a molding material. The addition amount of the organic binder is preferably 30% or more and 70 0 or less by volume of the total of the sialon powder, the sintering aid and the organic binder, more preferably from 35% or more and 60% or less by volume thereof.

Additionally, in the case of using an organic binder containing 5% or more and 30% or less by volume of a polyvinyl butyral (PVB) having an average molecular weight of 150, 000 or less and 35% or more and 80% or less by volume of a polyethylene glycol (PEG) having an average molecular weight of 5,000 or less, a product high in sintered density can be yielded regardless of whether the product has a small wall thickness or a large wall thickness. In the case of producing a product having a region having a wall thickness of 1 mm or more, the removal of the organic binder cannot be sufficiently attained only by the thermal debinding. Thus, by conducting an extraction debinding step after the injection molding, outflow channels for the organic binder can be made in the molded body, the step being of immersing the molded body in a solvent in which the PEG is soluble to elute out the PEG from the molded body, thereby removing the PEG in the molded body (preferably, removing the PEG in an amount corresponding to 25% or more by volume of the total of the organic binder). As a result, in the next step, that is, the thermal debinding step, a debound body can be yielded without generating defects inside the body.

If the addition amount of the PVB is less than 5% by volume, the strength of the molded body lowers easily. If the addition amount of the PVB is more than 30% by volume, the PVB remains as a carbide at the debinding time to produce an effect onto the composition of the sintered product. Thus, defects are easily generated inside the body.
If the addition amount of the PEG is less than 35% by volume, the PEG cannot be smoothly eluted out in the solvent immersion step (extraction debinding step). Thus, at the thermal debinding time, the outflow channels for the organic binder cannot be appropriately made. If the addition amount of the PEG is more than 80% by volume, the molded body strength lowers. Thus, in the step of inj ection-molding, the molded body is easily cracked or swelled to have some other defect.
More preferably, the addition amount of the PVB is from 10 to 25% by volume and the addition amount of the PEG is from 40 to 70% by volume.
It is also preferred that the used PVB is a PVB having an average molecular weight of 150,000 or less. A PVB having an average molecular weight of more than 150,000 is not completely decomposed when thermal debound, so as to remain as a carbide. Thus, when the molding material is sintered, bubbles are generated. As a result, a product having deteriorated physical properties is yielded. The used PVB is more preferably a PVB having an average molecular weight of 10,000 to 50,000.
In the meantime, it is also preferred that the used PEG is a PEG having an average molecular weight of 5,000 or less. If the average molecular weight is more than 5,000, the solubility in the solvent falls in the extraction debinding step. The used PEG is more preferably a PEG having an average molecular weight of 200 to 3,000.
The average molecular weights of any PVB and any PEG may be measured by gel permeation chromatography.

As a material for the organic binder other than the PVB and the PEG, the following organic materials may be used.
In order to give fluidity and improve the debindability, use is made of fatty acid esters, fatty acid amides, phthalic acid esters, paraffin wax, microcrystalline wax, polyethylene wax, polypropylene wax, carnauba wax, montan wax, urethanized wax, maleic anhydride modified wax, and others. Particularly preferred materials are fatty acid esters and fatty acid amides.

In order to give fluidity to the molding material when the material is molded, and give flexibility to the molded body, use may be made of a polyethylene, an amorphous polyolefin, an ethylene/vinyl acetate copolymer, an acrylic resin, a glycidyl methacrylate resin, and others. Particularly preferred examples are an ethylene/vinyl acetate copolymer, an acrylic resin, and an amorphous polyolefin.

The organic binder, the sialon powder and the sintering aid are heated and kneaded at about 120 to 180°C for about 2 hours to incorporate and disperse the sialon powder and the sintering aid completely in the organic binder. Thereafter, the mixture is taken out, and made into the form of pellets having a diameter of about 5 mm by means of an extruder or a pulverizer. This material is used as a molding material.

In the molding, it is necessary to decide the shape of a mold considering the dimensions after the material is sintered. These dimensions are dimensions obtained after the material is sintered or subjected to hot isostatic pressing, and are varied in accordance with the sintered density. Thus, for the design of the mold, it is necessary to consider a change in the dimensions after this time sufficiently. For this purpose, it is necessary to design the dimensions of the mold considering the aforementioned dimensional precision, and further calculate out, in advance, the shrinkage ratio from the molding to the sintering.

In the state where the mold is set into an injection molding machine, the molding is performed. By use of a single mold, the molding material may be molded into plural products. In accordance with the size of the product, the capacity of the injection molding machine is appropriately adjusted. In order not to generate bubbles, cracks or other defects in the molded body, it is necessary to adjust the injection rate and pressure and further make gas escapes in the mold in order to effectively escape the air from the inside of the mold and the gas generated from the molding material. When these effective gas escapes are not made, the air or gas generated from the molding material is taken into the molded body, so that bubbles are generated in the molded body.

When the resultant molded body is caused to undergo an extraction debinding step according to the invention, the molded body is put into a container filled with a solvent in which the PEG is soluble. In this way, the PEG in the molded body is eluted out. Preferably, the PEG is eluted out in an amount corresponding to 25% or more by volume of the total of the binder. The elution amount of the PEG can be obtained by removing the extracting solvent by heating after the extraction debinding step, measuring the amounts of remaining components, and then making a GPC-FTIR analysis.
Any organic binder component used in the CIM method is basically insoluble in water; thus, when water is used as the extracting solvent, the amount of the eluted organic binder can be regarded as the elution amount of the PEG. For this reason, when water is used as the extracting solvent, the elution amount of the PEG can be obtained by drying the molded body after the extraction debinding step to remove the extracting solvent, calculating the weight of the removed PEG from the difference in the weight of the molded body before and after the extraction debinding step, and then converting the weight to the volume thereof.
In the case where the molded body is a body having a region having a wall thickness of 1 mm or more, the following is caused when the elution amount of the PEG is less than 25% by volume: at the subsequent thermal debinding time, the organic binder cannot be efficiently removed so that a product having a sintered density of 95% or more (preferably, 99% or more) cannot be stably produced. The elution amount is more preferably 26% or more by volume, particularly preferably 30% or more by volume. As the molded body has a larger wall thickness, the organic binder therein is less removed at the thermal debinding time. Thus, it is advisable to make the elution amount of the PEG higher in the extraction debinding step. As the elution amount of the PEG is higher, the number of the outflow channels for the organic binder becomes larger. Thus, at the thermal debinding time, the inside organic binder can be removed to a degree nearer to perfection, so that a product higher in sintered density can be yielded. Examples of the solvent in which the PEG is soluble include, besides water, ethanol, methanol, benzene, and dichloromethane. In order not to dissolve the PVB therein, the use of water is particular preferred. In order to exclude the effect of impurities contained in water, the use of ion exchange water is desired. Considering the extraction rate, and a drying step after the extraction step, a mixed liquid of water and ethanol or methanol may be used. Moreover, the heating of the solvent makes it possible to improve the extraction rate.
The solvent used in the extraction debinding step in the invention may be any solvent in which the PVB is substantially insoluble. The solubility of the PVB therein is preferably less than 0.5% by volume at normal temperature. The use of a solvent in which the PVB is soluble is not preferred since it is feared that when the PVB is dissolved therein, the PVB is swelled by the solvent so that the molded body swells.
About the resin used as the organic binder, such as EVA, the molecular weight thereof is larger than that of the PEG in the invention by one digit. Thus, when the resin is dissolved in the solvent, the resin swells so that the molded body may unfavorably swell. For this reason, the solvent used in the extraction debinding is preferably a solvent in which others than the PEG in the invention are insoluble.
The PEG according to the invention is dissolved without being substantially swelled. Thus, the PEG makes it possible to elute out the molded body without deforming the body.

The debound body after the extraction step is naturally dried, dried by hot wind, or dried under reduced pressure, and then the body is put into a thermal debinding furnace so as to be thermal debound.
In the thermal debinding, it is proper to heat the molded body up to a highest temperature from 400 to 800°C at a temperature rise rate of 5 to 150°C/hr in an inert gas atmosphere, thereby removing the added organic binder. At about 300°C, the organic binder remains easily in a proportion of about 30%; thus, in order to make the amount of the remaining binder smaller, it is preferred to conduct the thermal debinding at 400°C or higher. At 600°C or higher, a perfect removal of the organic binder is easily attained. As a result, when the molded body is transferred to a sintering step, the molded body may unfavorably crumble. Thus, the debinding temperature is more preferably from 400 to 600°C at highest. The gas used in the thermal debinding is desirably a nitrogen gas, considering costs, and reactivity with the sialon powder. The temperature rise rate in the debinding is decided in accordance with the shape of the molded body. When the wall thickness is large, the temperature rise rate is made slow to prevent the generation of a crack or some other defect in the molded body. Moreover, the molded body can be prevented from being deformed by debinding the body in the state where the body is set to a tool about which the deformation by the heating in the debinding is taken into consideration.

When the debinding temperature is further raised to about 1000 to 1200°C to pre-sinter the molded body, the body after the debinding can be easily handled. Furthermore, an effective method for preventing the molded body from crumbling is the use of a sintering furnace having a debinding function. The present process can be shifted to sintering without lowering the temperature also after the end of the debinding. The treatments from the debinding to the sintering can be continuously conducted without interruption by linking a continuous debinding furnace (of a belt, pusher or walking beam type) to a continuous sintering furnace (of a belt, pusher or walking beam type).

When the coexistence of coarseness and denseness is caused in the molded body in the debinding step, the molded body, which has been thermal debound, may be subjected to a cold isostatic pressing (CIP) treatment at 50 MPa or more. In this case, the coexistence of coarseness and denseness can be reduced in the body and the generation of fine pores can be restrained. Thus, the reliability of the sintered product can be made high.

The molded body from which the binder has been removed through the thermal debinding step is sintered. In the sintering step, it is proper to raise the temperature at a temperature rise rate of 50 to 400°C/hr in an inert gas atmosphere, and obtain a sintered product at a sintering temperature of 1600 to 2000°C. The gas used in the sintering step is desirably a nitrogen gas considering costs and reactivity with the sialon powder. If the sintering temperature is lower than 1600°C, perfect sintering does not advance. Thus, it is feared that pores are present in the sintered product so that the strength thereof lowers remarkably. If the sintering temperature is higher than 2000°C, the crystal grains grow so that the strength may unfavorably lower.
At the sintering time, the atmosphere is desirably a normal pressure atmosphere or a pressurized atmosphere, considering thermal decomposition of the material at this time. Considering an unevenness in the temperature of the inside of the sintering furnace, it is more desired to conduct the sintering under a condition that the molded body is kept at the highest temperature for 1 to 4 hours. Moreover, when the sintering is performed in the state where the body is set to a tool about which deformation thereof based on the heating at the sintering time is taken into consideration, the deformation at the sintering time can be prevented.
When the molded body is sintered in the state of being put in a container made of silicon nitride, aluminum nitride, alumina, or sialon (container which completely covers the molded body after the debinding, for example, a container in a box form or a cylindrical form), prevention is attained against any reaction that results from residues of the binder and gas impurities, which remain in the sintering furnace at a high temperature time. Thus, the incorporation of impurities can be restrained at the sintering time.

When the product after the sintering is subjected to a hot isostatic pressing (HIP) treatment at a treating pressure of 100 MPa or more and a treating temperature of 1600°C or higher and 1900°C or lower, fine pores generated in the sintering step can be decreased so that the reliability of the sintered product can be made high.
When the product after the sintering or the HIP treatment is further caused, as the need arises, to undergo a polishing step such as barrel polishing, the surface roughness can be improved and the burr can be removed. In order to improve the dimensional precision, the sintered product may be mechanically machined.

The process according to the invention makes it possible to produce a sialon ceramic product high in toughness and density, which has not easily been produced in the prior art, and produce a light turbine wheel and a light vane nozzle, for an automobile component, high in corrosion resistance even at a high temperature of 1000°C or higher.

### [Test Example 1]

Sialon ceramic sintered products were produced. A molding material, heating and kneading conditions, injection molding conditions, debinding conditions, sintering conditions and others were as follows (with no extraction debinding step) : 100 molded bodies, 35 mm x 5 mm x 0.7 mm, were formed by molding, and each of the bodies was measured as to whether or not defects were generated after the debinding and after the sintering, and about the sintered density.
Sialon powder: average particle diameter of 0.5 µm (composition formula: Si₅AlON₇)
Sintering aid: yttrium oxide
Organic binder composition: 55% by volume of paraffin wax, 25% by volume of polybutyl methacrylate, 15% by volume of ethylene/vinyl acetate copolymer, and 5% by volume of stearic acid
Sialon powder: 90% by weight, and yttrium oxide: 10% by weight
Molding material: 47% by volume of the organic binder, and 53% by volume of the sialon powder + the sintering aid
Heating and kneading: 160°C for 2 hours
Injection molding conditions: 160°C and a mold temperature of 20°C
Thermal debinding conditions: highest temperature of 600°C kept for 2 hours (the flow of nitrogen in the atmospheric pressure); and temperature rise rate: 10°C/hr
Sintering conditions: highest temperature of 1750°C kept for 2 hours (the flow of nitrogen in the atmospheric pressure) ; temperature rise rate: 150°C/hr; sintering by use of a container of sialon sintered product

The debound bodies and the sintered products were each subjected to an X-ray nondestructive observation and as a result, no defect was observed therein.
The sintered products were black, and the sintered density was 99.6%.
From X-ray diffraction data on the sintered products, a peak resulting from Si₅AlON₇ was verified.

### [Test Example 2]

In order to investigate appropriate values of the average particle diameter of a sialon powder, the addition amount of a sintering aid, and the addition amount of an organic binder, molding materials in which individual ranges thereof were varied were formed in a large number. Yttrium oxide was used as the sintering aid, and the composition of the organic binder was made equal to that in Test Example 1.
Under the same production conditions as in Test Example 1, products, 35 mm x 5 mm x 0.9 mm, were produced. The results are together shown in Table 1.

**[Table 1]**

| Average particle diameter of sialon powder A (µm) | Addition amount*1 of amount*2 of sintering aid B (wt%) | Addition organic binder C (vol%) | Evaluation |
|---|---|---|---|
| 0.005 | 10 | 50 | Sintered body was cracked. |
| 0.01 | | | Sintered body was a good non-cracked product. |
| 0.1 | | | Sintered body was a good non-cracked product. |
| 1.0 | | | Sintered body was a good non-cracked product. |
| 3.0 | | | Sintered body was a good non-cracked product. |
| 3.5 | | | Sintered density was less than 95%. |
| 0.5 | 0.4 | | Molding material was not sintered. |
| | 0.5 | | Sintered body was a good non-cracked product. |
| | 1.0 | | Sintered body was a good non-cracked product. |
| | 5.0 | | Sintered body was a good non-cracked product. |
| | 10 | | Sintered body was a good non-cracked product. |
| | 15 | | Sintered body was a good non-cracked product. |
| | 16 | | Sintered body was brittle to be easily cracked. |
| | 10 | 25 | No molded body was yielded because of high viscosity. |
| | | 30 | Sintered body was a good non-cracked product. |
| | | 40 | Sintered body was a good non-cracked product. |
| | | 60 | Sintered body was a good non-cracked product. |
| | | 70 | Sintered body was a good non-cracked product. |
| | | 75 | Debound body swelled. |

| | | | |
|---|---|---|---|
| *1 Addition amount of sintering aid B: B ÷ (A + B) × 100 *2 Addition amount of organic binder C: C ÷ (A + B + C) × 100 | | | |

From the results of the experiments, it has been understood that in the case of a product having a wall thickness of less than 1 mm, use is made of a material in which a sialon powder having an average particle diameter of 0.01 to 3.0 µm is used, a sintering aid is incorporated in an amount of 0.5 to 15% by weight of the total of the sialon powder and the sintering aid, and an organic binder is incorporated in an amount of 30 to 70% by volume of the total of the molding material, thereby making it possible to yield a molded body by injection molding, in which the molding material is filled into a mold, and further the molded body is thermal debound and sintered, thereby making it possible to yield a sialon sintered product having a sintered density of 99% or more.

### Example 1

Sialon ceramic sintered products were produced by the process according to the present invention. A molding material, heating and kneading conditions, injection molding conditions, debinding conditions, sintering conditions and others were as follows: 100 molded bodies, 35 mm x 35 mm x 3 mm, were formed by molding, and each of the bodies was measured as to whether or not defects were generated after the debinding and after the sintering, and about the sintered density.
Sialon powder: average particle diameter of 0.5 µm (composition formula: Si₅AlON₇)
Sintering aid: yttrium oxide
Organic binder composition: 15% by volume of PVB (molecular weight: 15,000), 45% by volume of PEG (molecular weight: 2,000), 5% by volume of amorphous polyolefin, 15% by volume of polybutyl methacrylate, 15% by volume of ethylene/vinyl acetate copolymer, and 5% by volume of stearic acid
Sialon powder: 90% by weight, and yttrium oxide: 10% by weight
Molding material: 48% by volume of the organic binder, and 52% by volume of the sialon powder + the sintering aid
Heating and kneading: 160°C for 2 hours
Injection molding conditions: 180°C and a mold temperature of 20°C
Extraction debinding conditions: 40°C for 12 hours, and extracting solvent: ion exchange water
Drying conditions: 40°C for 4 hours
Thermal debinding conditions: highest temperature of 600°C kept for 2 hours (the flow of nitrogen in the atmospheric pressure); and temperature rise rate: 20°C/hr
Sintering conditions: highest temperature of 1750°C kept for 2 hours (the flow of nitrogen in the atmospheric pressure) ; temperature rise rate: 150°C/hr; sintering by use of a container of sialon sintered product

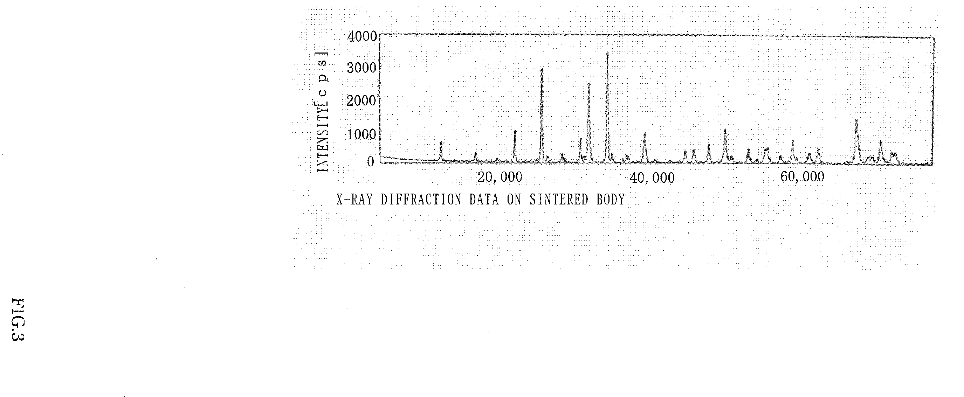

After the extraction debinding step, 70% by volume of the PEG (31.5% by volume of the total of the binder) was removed (the organic binders other than the PEG were substantially insoluble in water; thus, the elution amount of the PEG was calculated out by drying the molded body after the extraction debinding step, regarding, as the weight of the removed PEG, the difference in the weight of the molded body before and after the extraction debinding step, and then converting the weight to the volume thereof).
The debound bodies and the sintered products were each subjected to an X-ray nondestructive observation and as a result, no defect was observed therein.
The sintered products were black, and the sintered density was 99.7%.

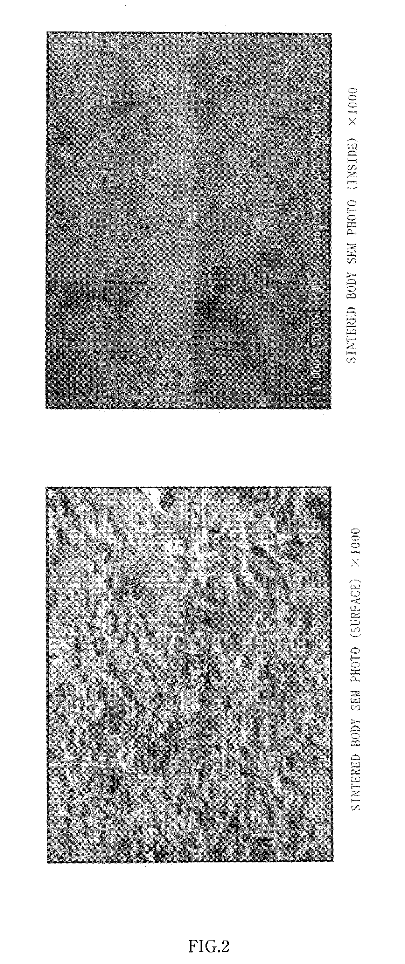

In Fig. 2 are shown SEM photographs of the surface and the inside of one of the sintered products. Pores were neither recognized in the surface nor the inside.
An X-ray diffraction data on the sintered product is shown in Fig. 3. A peak resulting from Si₅AlON₇ was verified.

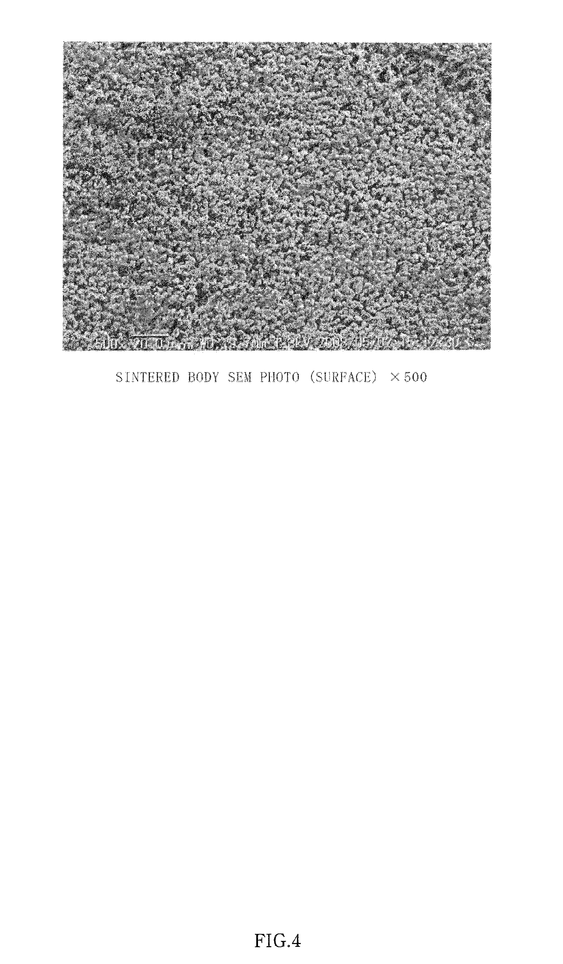

Moreover, any effect of impurities remaining in the sintering step was able to be excluded by putting the molded body into the container of silicon nitride, aluminum nitride, alumina or sialon and then sintering the body. The surface of each of the products obtained by putting the molded body into the container and then sintering the body was made dense, and the product was black. However, in the case of performing the sintering without using the container, the surface of each of the sintered products became cloudy. An observation result thereof through an electron microscope made it evident that under the same conditions, the sintering was insufficient as shown in Fig. 4.

### [Comparative Example 1]

Sintered products to which no sintering aid was added were produced. A molding material, heating and kneading conditions, injection molding conditions, debinding conditions, sintering conditions and others were as follows: 100 molded bodies, 35 mm x 35 mm x 3 mm, were formed by molding, and each of the bodies was measured as to whether or not defects were generated after the debinding and after the sintering, and about the sintered density.
Sialon powder: average particle diameter of 0.5 µm
Sintering aid: not added
Organic binder composition: 15% by volume of PVB (molecular weight: 27,000), 45% by volume of PEG (molecular weight: 2,000), 5% by volume of amorphous polyolefin, 15% by volume of polybutyl methacrylate, 15% by volume of ethylene/vinyl acetate copolymer, and 5% by volume of stearic acid
Sialon powder: 100% by weight
Molding material: 48% by volume of the organic binder, and 52% by volume of the sialon powder
Heating and kneading: 160°C for 2 hours
Injection molding conditions: 180°C and a mold temperature of 20°C
Extraction debinding conditions: 40°C for 12 hours, and extracting solvent: ion exchange water
Drying conditions: 40°C for 4 hours
Thermal debinding conditions: highest temperature of 600°C kept for 2 hours (the flow of nitrogen in the atmospheric pressure); and temperature rise rate: 20°C/hr
Sintering conditions: highest temperature of 1750°C kept for 2 hours (the flow of nitrogen in the atmospheric pressure) ; temperature rise rate: 150°C/hr; sintering by use of a container of sialon sintered product

After the extraction debinding step, 70% by volume of the PEG (31.5% by volume of the total of the binder) was removed.
The debound bodies and the sintered products were each subjected to an X-ray nondestructive observation and as a result, no defect was observed therein.
The sintered products were black, and the sintered density was 87.5%. Thus, the products were unable to be completely made dense.
Moreover, even when a product obtained by greasing this molded body and then subjecting the body to a CIP treatment was used to be sintered, the sintered density was a low value of 90% or less. Although the sintered product was further subjected to a HIP treatment, the sintered density was 90% or less. Thus, a dense product having a sintered density of 99% or more was unable to be yielded.

### Example 2

Various investigations were made about the species and the addition amount of a sintering aid and the composition of an organic binder, and experiments were made. Molding conditions, extraction debinding conditions, drying conditions and thermal debinding conditions were made the same as in Example 1. The conditions used in the experiments, and the results are shown in Tables 2 to 4.

**[Table 2]**

| Formulation of each powder (sialon powder and sintering aid) | | | | | |
|---|---|---|---|---|---|
| Powder formulation | Sialon powder (wt%) | Sintering aid (wt%) | | | |
| | | Yttrium oxide | Alumina | Zirconia | Ytterbium oxide |
| A | 90 | 10 | - | - | - |
| B | 90 | 5 | - | 5 | - |
| C | 90 | 5 | 5 | - | - |
| D | 92.5 | 7.5 | - | - | - |
| E | 92.5 | - | 7.5 | - | - |
| F | 92.5 | - | - | 7.5 | - |
| G | 92.5 | - | - | - | 7.5 |
| H | 95 | 5 | - | - | - |
| I | 97.5 | 2.5 | - | - | - |
| J | 99 | 1 | - | - | - |
| K | 100 | - | - | - | - |

**[Table 3]**

| Composition (vol%) of each organic binder | | | | | | | | | |
|---|---|---|---|---|---|---|---|---|---|
| | PVB15000 | PVB180000 | PEG1500 | PEG2000 | PEG10000 | EVA | APO | PBMA | St |
| a | 15 | - | - | 45 | - | 5 | 15 | 15 | 5 |
| b | 10 | - | 50 | - | - | 5 | 16 | 16 | 3 |
| c | 3 | - | - | 50 | - | 10 | 16 | 16 | 5 |
| d | 0 | - | - | 50 | - | 15 | 16 | 16 | 3 |
| e | 15 | - | - | - | 45 | 5 | 15 | 15 | 5 |
| f | - | 15 | - | 45 | - | 5 | 15 | 15 | 5 |

PVB: polyvinyl butyral, PEG: polyethylene glycol, EVA: ethylene/vinyl acetate copolymer, APO: amorphous polyolefin, PBMA: polybutyl methacrylate, St: stearic acid

**[Table 4]**

| | Powder | Binder | Proportion in molding material (vol%) | | PEG amount in binder (vol%) | PEG extraction rate *1 (vol%) | Extracted PEG amount in total of binder (vol%) | Sintering temperature (°C) | Internal defects in molded body | Internal defects after debinding | Internal defects after sintering | Sintered density (%) |
|---|---|---|---|---|---|---|---|---|---|---|---|---|
| | | | Powder | Binder | | | | | | | | |
| Sample 1 | A | a | 52 | 48 | 45 | 70 | 31.5 | 1700 | Not generated | Not generated | Not generated | 99.7 |
| Sample 2 | B | | | | 45 | 69 | 31.05 | 1700 | Not generated | Not generated | Not generated | 99.5 |
| Sample 3 | C | | | | 45 | 72 | 32.4 | 1700 | Not generated | Not generated | Not generated | 99.5 |
| Sample 4 | D | | | | 45 | 71 | 31.95 | 1725 | Not generated | Not generated | Not generated | 99.5 |
| Sample 5 | E | | | | 45 | 70 | 31.5 | 1800 | Not generated | Not generated | Not generated | 99.2 |
| Sample 6 | F | | | | 45 | 69 | 31.05 | 1650 | Not generated | Not generated | Not generated | 99.5 |
| Sample 7 | G | | | | 45 | 70 | 31.5 | 1725 | Not generated | Not generated | Not generated | 99.4 |
| Sample 8 | H | | | | 45 | 71 | 31.95 | 1850 | Not generated | Not generated | Not generated | 99.7 |
| Sample 9 | I | | | | 45 | 68 | 30.6 | 1900 | Not generated | Not generated | Not generated | 99.3 |
| Sample 10 | J | | | | 45 | 67 | 30.15 | 1900 | Not generated | Not generated | Not generated | 92.3 (99% or more after HIP treatment) |
| Sample 11 | K | | | | 45 | 68 | 30.6 | 1900 | Not generated | Not generated | Not generated | 88.4 (less than 95% even after HIP treatment) |
| Sample 12 | | | | | 45 | 70 | 31.5 | 1700 | Not generated | Not generated | Not generated | 99.7 |
| Sample 13 | | b | | | 50 | 75 | 37.5 | 1700 | Not generated | Not generated | Not generated | 99.8 |
| Sample 14 | | c | | | 50 | 72 | 36 | - | Cracked at the time of releasing the molded body | Not generated | - | - |
| Sample 15 | D | d | | | 50 | 70 | 35 | - | Cracked at the time of releasing the molded body | Not generated | - | - |
| Sample 16 | | e | | | 45 | 5 | 2.25 | - | Not generated | Cracked inside | - | - |
| Sample 17 | | f | | | 45 | 72 | 32.4 | 1700 | Not generated | Carbide remained inside | Pores having a size of about 50 µm were generated | 93.7 |

| | | | | | | | | | | | | |
|---|---|---|---|---|---|---|---|---|---|---|---|---|
| *1: Proportion (vol%) of PEG elution amount in total of PEG | | | | | | | | | | | | |

About each of the samples 1 to 9, 12 and 13, a satisfactory sintered product having a sintered density of 99% or more was yielded. However, about the sample 10 containing the sintering aid in a proportion of 1% by weight and the sample 11 containing no sintering aid, only sintered products having a sintered density of less than 95%, which had many pores therein, were yielded. However, about the sintered product of the sample 10, a product having a sintered density of 99% or more was able to be yielded by conducting the HIP treatment at 1000 MPa and 1700°C. However, about the sample 11, a sintered product having a sintered density of 95% or more was unable to be yielded even by conducting the same HIP treatment as described above.
About each of the sample 14, in which the amount of PVB in the organic binder was 3% by volume, and the sample 15 containing no PVB, the molded body strength lowered so that the molded body was cracked when molded. About the sample 16, in which a PEG having a molecular weight of 10,000 was used, the extraction rate of the PEG lowered so that the molded body was cracked when thermal debound. About the sample 17, the experiment was made by use of a PVB having a molecular weight of 180,000; however, remaining carbon was present even after the debinding. After the sintering, pores having sizes of about 50 µm were generated.

The same samples 1 to 17 were each used to produce the same product (35 mm x 5 mm x 0.7 mm) as in Test Example 1 under the same production conditions as in Test Example 1 (with no extraction debinding step). As a result, about the samples other than the sample 11 (no sintering aid), products having a sintered density of 99% or more were able to be yielded.

### Example 3

From the examples described above and other experiments, it has been understood that in order to stably produce a sialon sintered product having a wall thickness of 1 mm or more, it is preferred to use an appropriate organic binder (organic binder containing specified PVB and PEG) and conduct an extraction debinding step before thermal debinding. In order to make a further investigation about the appropriate organic binder, various binders were each used to produce a product, 35 mm x 35 mm x 3 mm, in which others than the composition of the organic binder were made identical with those in Example 1. The results are together shown in Table 5.
The balance of the organic binder was composed of EVA, PBMA and stearic acid in each blend proportion shown in Table 5.

**[Table 5]**

| Average molecular | Average molecular | Composition of organic binder (vol%) | | | | | Evaluation |
|---|---|---|---|---|---|---|---|
| weight of PVB | weight of PEG | PVB | PEG | EVA | PBMA | St | |
| 10000 | 2000 | 15 | 45 | 20 | 15 | 5 | Very good |
| 50000 | | | | | | | Very good |
| 100000 | | | | | | | Good |
| 150000 | | | | | | | Good |
| 160000 | | | | | | | Carbide remained in debound body. |
| 15000 | 1000 | | | | | | Very good |
| | 3000 | | | | | | Very good |
| | 5000 | | | | | | Good |
| | 6000 | | | | | | Molded body swelled at thermal debinding time. |
| | 2000 | 4 | | 31 | | | Molded body was brittle to be cracked. |
| | | 5 | | 30 | | | Good |
| | | 10 | | 25 | | | Very good |
| | | 20 | | 15 | | | Very good |
| | | 30 | | 5 | | | Good |
| | | 35 | | | 10 | | Carbide remained in debound body. |
| | | 15 | 30 | 25 | 25 | | Molded body was cracked at thermal debinding time. |
| | | | 35 | 25 | 20 | | Good |
| | | | 40 | 20 | | | Very good |
| | | | 50 | 15 | 15 | | Very good |
| | | 10 | 60 | | 10 | | Very good |
| | | | 80 | 4 | 4 | 2 | Good |
| | | | 85 | 2 | 1 | | Molded body was brittle to be cracked. |

As shown in Table 5, when the addition amount of the PVB was less than 5% by volume, the molded body strength lowered easily; and when the addition amount of the PVB was more than 30% by volume, the PVB remained as a carbide at the thermal debinding time, so that defects were easily generated inside. The PVB having an average molecular weight larger than 150, 000 was not completely decomposed at the thermal debinding time so that the PVB remained as a carbide. At the sintering time, bubbles were generated to deteriorate physical properties of the products easily.
When the addition amount of the PEG was less than 35% by volume, the PEG was not smoothly eluted with ease in the solvent immersion step (extraction debinding step). When the addition amount of the PEG was more than 80% by volume, the molded body strength lowered. Thus, at the injection molding time, defects such as a crack and swelling were easily generated. When a PEG having an average molecular weight more than 5,000 was used, the solubility in the solvent lowered in the extraction debinding step so that the extraction debinding easily became insufficient.

### Example 4

An investigation was made about the elution amount of the PEG at the extraction debinding. As the PEG, a PEG having an average molecular weight of 2,000 was used. Moreover, a PVB having an average molecular weight of 27,000 was used. Other organic binder components are as shown in Table 6. The elution amount of the PEG was adjusted in accordance with the period for the extraction debinding. Others than the organic binder composition and the extraction debinding period were made identical with those in Example 1. The results are shown in Table 6.

**[Table 6]**

| Organic binder composition (vol%) | | | | | | Proportion of PEG elution amount in total of PEG (vol%) | Proportion of PEG elution-out amount in total of binder (vol%) | Evaluation |
|---|---|---|---|---|---|---|---|---|
| PEG | PVB | EVA | PBMA | APO | St | | | |
| 35 | 15 | 20 | 15 | 10 | 5 | 69.1 | 24.2 | Cracked after thermal debinding |
| | | | | | | 74.0 | 25.9 | Cracked neither after debinding nor after sintering to give a good result |
| 45 | 10 | 15 | 15 | 10 | 5 | 52.4 | 23.6 | Cracked after thermal debinding |
| | | | | | | 57.1 | 25.7 | Cracked neither after debinding nor after sintering to give a good result |
| | | | | | | 88.0 | 39.6 | Cracked neither after debinding nor after sintering to give a good result |
| | | | | | | 93.6 | 42.1 | Cracked neither after debinding nor after sintering to give a good result |
| 60 | 10 | 10 | 10 | 7 | 3 | 38.2 | 22.9 | Cracked after thermal debinding |
| | | | | | | 42.3 | 25.4 | Cracked neither after debinding nor after sintering to give a good result |
| | | | | | | 79.5 | 47.7 | Cracked neither after debinding nor after sintering to give a good result |
| | | | | | | 93.0 | 55.8 | Cracked neither after debinding nor after sintering to give a good result |
| 80 | 5 | 5 | 5 | 2.5 | 2.5 | 29.6 | 23.7 | Cracked after thermal debinding |
| | | | | | | 32.3 | 25.8 | Cracked neither after debinding nor after sintering to give a good result |
| | | | | | | 59.3 | 47.4 | Cracked neither after debinding nor after sintering to give a good result |
| | | | | | | 83.6 | 66.9 | Cracked neither after debinding nor after sintering to give a good result |
| | | | | | | 96.0 | 76.8 | Cracked neither after debinding nor after sintering to give a good result |

As shown in Table 6, it has been understood that when the PEG can be eluted out in an amount corresponding to 25% or more by volume of the total of the organic binder, even a molded body having a wall thickness of 3 mm can be appropriately thermal debound after the extraction debinding, so that a sintered product having a sintered density of 99% or more can be yielded. The same results were obtained also in the case of using PEGs having different average molecular weights to make the same experiment. The same results were obtained also in the case of varying the amount of the organic binder in the molding material to make the same experiment.
It is considered that an appropriate extraction debinding rate is varied in accordance with the wall thickness of the molded body. It is however considered that in the case of molded bodies having a wall thickness of 1 mm or more, it is preferred to elute out the PEG in an amount corresponding to 25% or more by volume of the total of the organic binder.

### Example 5

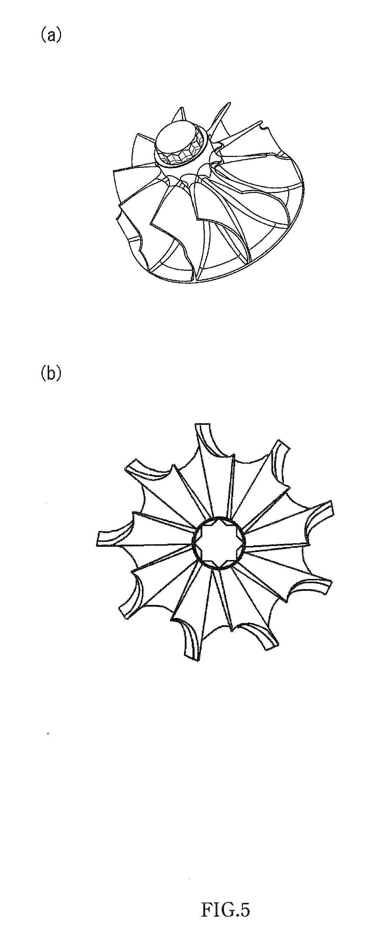

Turbine wheels were produced by use of the process according to the invention. A molding material, heating and kneading conditions, injection molding conditions, debinding conditions, sintering conditions and others were as follows: 20 molded bodies (outside diameter: 58 mm, blade thickness: 0.5 to 2.1 mm, and central axis diameter: 15 mm) of a turbine wheel illustrated in Fig. 5 were formed by molding, debound, and then sintered. Thereafter, measurements were made as to whether or not defects were generated, and about the sintered density.
Sialon powder: average particle diameter of 0.5 µm
Sintering aid: yttrium oxide
Organic binder composition: 10% by volume of PVB (molecular weight: 15,000), 50% by volume of PEG (molecular weight: 1,500), 5% by volume of amorphous polyolefin, 16% by volume of polybutyl methacrylate, 16% by volume of ethylene/vinyl acetate copolymer, and 3% by volume of stearic acid
Sialon powder: 92.5% by weight, and yttrium oxide: 7.5% by weight
Molding material: 48% by volume of the organic binder, and 52% by volume of the sialon powder + the sintering aid
Heating and kneading: 160°C for 2 hours
Injection molding conditions: 180°C and a mold temperature of 20°C
Extraction debinding conditions: 40°C for 24 hours, and extracting solvent: ion exchange water
Drying conditions: 40°C for 4 hours
Thermal debinding conditions: highest temperature of 600°C kept for 2 hours (the flow of nitrogen in the atmospheric pressure); and temperature rise rate: 10°C/hr
Sintering conditions: highest temperature of 1750°C kept for 2 hours (the flow of nitrogen in the atmospheric pressure); temperature rise rate: 150°C/hr

After the extraction debinding step, 75% by volume of the PEG (37.5% by volume of the total of the binder) was removed.
The debound bodies and the sintered products were each subjected to an X-ray nondestructive observation and as a result, no defect was observed therein.
The sintered products were black, and the sintered density was 99.5%.

### Example 6

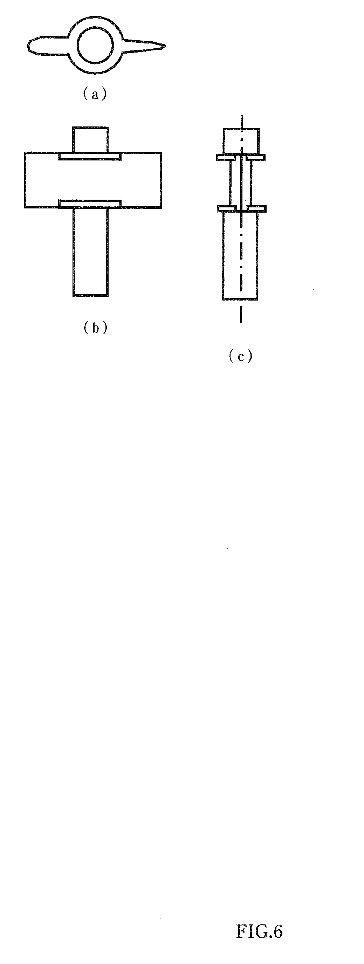

Vane nozzle components were produced by the process according to the invention. In the same way as in Example 5, 20 molded bodies (wing length: 24.5 mm, wind thickness: 0.4 to 2.2 mm, and axial diameter: 4.0 mm) of a vane nozzle component illustrated in Fig. 6 were formed by molding, debound, and then sintered. Thereafter, measurements were made as to whether or not defects were generated, and about the sintered density.

After the extraction debinding step, 75% by volume of the PEG (37.5% by volume of the total of the binder) was removed.
The debound bodies and the sintered products were each subjected to an X-ray nondestructive observation and as a result, no defect was observed therein.
The sintered products were black, and the sintered density was 99.7%.

### INDUSTRIAL APPLICABILITY

According to the conventional processes, it is difficult to produce a sialon ceramic component having a complicated three-dimensional shape; however, according to the process of the present invention, it is possible to produce high-density sialon sintered products each having a complicated three-dimensional shape, with good precision, in a large number. Thus, the invention can be applied to heat-resistant components for automobiles, in particular, a turbine wheel or a vane nozzle component for a turbocharger, and others.

## Claims

1. A process for producing a sialon ceramic sintered product, comprising
the step of preparing a molding material containing a sialon powder A, a sintering aid B, and an organic binder C, in which
the sialon powder A is a powder having an average particle diameter of 0.01 to 3.0 µm,
the sintering aid B is an oxide of an element selected from the group consisting of Y, Yb, Al and Zr, the aid B is contained in an amount of 0.5 to 15% by weight of the total of the sialon powder A and the sintering aid B,
the organic binder C contains 5 to 30% by volume of a polyvinyl butyral having an average molecular weight of 150, 000 or less and 35 to 80% by volume of a polyethylene glycol having an average molecular weight of 5,000 or less, and the binder C is contained in an amount of 30 to 70% by volume of the total of the molding material,
the step of injection-molding the molding material, thereby yielding a molded body, and
the step of thermal debinding the molded body, and sintering the molded body.

2. The process for producing a sialon ceramic sintered product according to claim 1, wherein after the injection molding step, an extraction debinding step is performed, the extraction debinding step being the step of removing at least one portion of the polyethylene glycol in the molded body by use of a solvent in which the polyethylene glycol is soluble but the polyvinyl butyral is not soluble.

3. The process for producing a sialon ceramic sintered product according to claim 2, wherein in the extraction debinding step, the polyethylene glycol is removed in an amount of 25% or more by volume of the total of the binder in the molded body.

4. The process for producing a sialon ceramic sintered product according to claim 2 or 3, wherein after the extraction debinding step is performed, the molded body is dried to remove the solvent, and then the molded body is thermal debound and sintered.

5. The process for producing a sialon ceramic sintered product according to any one of claims 1 to 4, wherein
the thermal debinding is performed at a temperature rise rate of 5 to 150°C/hr up to a highest temperature of 400 to 800°C in an inert gas atmosphere, and further
the sintering is performed at a temperature rise rate of 50 to 400°C/hr and a sintering temperature of 1600 to 2000°C in an inert gas atmosphere.

6. The process for producing a sialon ceramic sintered product according to any one of claims 1 to 5, wherein the molded body after the thermal debinding is subjected to a cold isostatic pressing treatment at 50 MPa or more, and then sintered.

7. The process for producing a sialon ceramic sintered product according to any one of claims 1 to 6, wherein the molded body is put into a container comprising a material selected from the group consisting of silicon nitride, aluminum nitride, alumina and sialon, and then sintered.

8. The process for producing a sialon ceramic sintered product according to any one of claims 1 to 7, wherein the sintered product is subjected to a hot isostatic pressing treatment at a treating pressure of 100 MPa or more and a treating temperature of 1600 to 1900°C.

9. A sialon ceramic sintered product produced by the production process according to any one of claims 1 to 8.

10. The sialon ceramic sintered product according to claim 9, which is a turbine wheel or a vane nozzle component for a turbocharger for an automobile.
